Europäisches Patentamt

European Patent Office

Office européen des brevets

(11) Veröffentlichungsnummer: **0 407 627 A1**

# EUROPÄISCHE PATENTANMELDUNG

(21) Anmeldenummer: **89112566.8**

(22) Anmeldetag: **10.07.89**

(51) Int. Cl.5: **G11B 5/84**

(43) Veröffentlichungstag der Anmeldung:
**16.01.91 Patentblatt 91/03**

(84) Benannte Vertragsstaaten:
**CH DE FR GB LI**

(71) Anmelder: **LEYBOLD AKTIENGESELLSCHAFT**
**Bonner Strasse 498**
**D-5000 Köln 51(DE)**

(72) Erfinder: **Michael, Klaus, Dr.**
**Schöne Aussicht 16 a**
**D-6460 Gelnhausen-Haitz(DE)**
Erfinder: **Petz, Andreas**
**Tannenweg 28**
**D-6454 Bruchköbel(DE)**

(74) Vertreter: **Leineweber, Jürgen, Dipl.-Phys.**
**Nagelschmiedshütte 8**
**D-5000 Köln 40(DE)**

(54) **Verfahren zur Behandlung der Oberfläche eines Substrates.**

(57) Die Erfindung bezieht sich auf ein Verfahren zur Behandlung der Oberfläche eines Substrates aus einer Aluminium-Magnesium-Legierung zur Erzielung einer möglichst ebenen Oberfläche; dazu wird vorgeschlagen, daß das Substrat zunächst einem Läppvorgang und danach einem Drehvorgang unterworfen wird; vorteilhafterweise wird der Läppvorgang in zwei Stufen durchgeführt, wobei die Substrate in der ersten Läppstufe bei geringer Anpreßkraft angeläppt und in der zweiten Läppstufe (Hauptläppstufe) unter erhöhter Anpreßkraft abgeläppt werden.

EP 0 407 627 A1

# VERFAHREN ZUR BEHANDLUNG DER OBERFLÄCHE EINES SUBSTRATES

Die Erfindung bezieht sich auf ein Verfahren zur Behandlung der Oberfläche eines Substrates aus einer Aluminium-Magnesium-Legierung zur Erzielung einer möglichst ebenen Oberfläche.

Substrate dieser Art werden insbesondere bei der Herstellung von Magnetspeicherplatten eingesetzt. Sie bestehen aus einer Aluminium-Magnesium( $AlMg_4$ )-Legierung, bei der der Magnesium-Anteil wenige Prozent (2 bis 5 %) beträgt. Die üblicherweise scheibenförmigen Substrate mit Durchmessern von einigen Zoll werden nach ihrer Herstellung mit einer Nickel-Phosphor-Schicht versehen. Diese unmagnetische Schicht bildet die Grundlage für die magnetisierbare Schicht, die der Informationsträger der jeweiligen Magnetspeicherplatte ist.

Bei Magnetspeicherplatten werden immer höhere Informationsdichten angestrebt. Eine wesentliche Voraussetzung dafür ist, daß der Abstand zwischen der magnetisierbaren Schicht und dem die magnetischen Informationen schreibenden oder lesenden Kopf extrem klein ist. Flughöhen des Schreib-/Lesekopfes von weniger als 1 $\mu$ müssen erreicht werden. Dieses setzt wiederum voraus, daß die Oberflächen der Magnetspeicherplatte und damit des zugehörigen Substrates extrem eben sind.

Der vorliegenden Erfindung liegt die Aufgabe zugrunde, ein Verfahren zur Behandlung der Oberfläche eines Substrates aus einer Aluminium-Magnesium-Legierung vorzuschlagen, mit welchem extrem ebene Oberflächen reproduzierbar erzielt werden können.

Erfindungsgemäß wird diese Aufgabe dadurch gelöst, daß das Substrat zunächst einem Läppvorgang und danach einem Drehvorgang unterworfen wird. Die Anwendung dieser Maßnahmen erlaubt es, Substrate mit extrem kleiner Ebenheit (wesentlich kleiner als 10 $\mu$) herzustellen. Dadurch, daß dem Drehvorgang ein Läppvorgang vorhergeht, wird erreicht, daß ein von inneren Spannungen im wesentlichen freies Substrat dem Drehvorgang unterworfen wird. Ein infolge von Spannungen unebenes Substrat wird, wenn allein ein Drehvorgang durchgeführt wird, auf dem Spannfutter elastisch verformt. Nach dem Überdrehen des Substrates liegt, solange das Substrat eingespannt ist, eine ebene Substratoberfläche vor. Nach dem Entspannen nimmt das elastisch verformte Substrat jedoch wieder seine ursprünglich unebene Form an. Aufgrund des dem Drehvorgang vorhergehenden Läppvorganges wird bereits ein Substrat mit extrem ebener Oberfläche erzielt, das frei von inneren Spannungen ist. Der sich anschließende Drehvorgang dient im wesentlichen der Erzielung einer bestimmten Rauhigkeit, die für die sich anschließende Beschichtung mit Nickel-Phosphor erforderlich ist.

Der Läppvorgang wird zweckmäßig in einer Zweischeibenläppmaschine durchgeführt, und zwar mit einem Läppmittel, das aus Läppöl und losem Korn besteht. Die Körnung muß so gewählt sein, daß eine Ebenheit von 5 $\mu$ und weniger erreicht werden kann. Mit einer Körnung < 20 $\mu$ kann dieses erreicht werden.

Besonders vorteilhaft ist es, wenn der Läppvorgang in zwei Stufen durchgeführt wird. In der ersten Stufe werden die Substrate mit geringer Anpresskraft, d. h. im wesentlichen ohne Verformung, angeläppt. In dieser Stufe werden die vorhandenen "Berge" ohne maßgebliche Verformung des Substrates abgetragen bis ein vollflächiger Kontakt zwischen Läppscheibe und Substrat vorhanden ist. In der sich anschließenden zweiten Läppstufe, der Hauptläppstufe, werden die Oberflächen der Substrate unter erhöhter Anpreßkraft abgeläppt.

Besonders vorteilhaft ist es, wenn sich an diese Hauptläppstufe eine dritte Läppstufe, eine Nachläppstufe anschließt. In dieser Stufe werden Verwerfungen, die sich aufgrund von eventuell noch vorhandenen Restspannungen ergeben, wiederum mit reduziertem Anpreßdruck, d. h. ohne Verformung des Substrates, abgeläppt. Mit dieser Verfahrensweise kann eine Ebenheit der Substrate von weniger als 5 $\mu$ reproduzierbar erreicht werden. Die Gesamtanpreßkraft während des Läppvorganges beträgt 100 bis 1.500 Newton. Unter "geringe" bzw. "erhöhte" Anpreßkraft sollen die Kraftwerte am unteren bzw. oberen Ende dieses Kraftbereiches verstanden werden.

Beispiel:

Angefaste Substrate werden in einer Zweischeibenläppmaschine in drei Stufen geläppt, und zwar mit einem Läppmittel, das aus Läppöl und einem Korn mit einer Körnung < 16 $\mu$ besteht. In der ersten Stufe werden die Substrate mit einer Anpreßkraft von ca. 150 Newton, also weitgehend ohne Verformung, angeläppt. In der sich anschließenden Hauptläppstufe werden 15 bis 20 $\mu$ jeder Seite der Substrate bei einer Anpreßkraft von ca. 1.400 Newton abgeläppt. An diese Hauptläppstufe schließt sich eine Nachläppstufe mit einer Anpreßkraft von ca. 100 Newton an, in der gegebenenfalls noch aufgrund von Restspannungen auftretende Verwerfungen (Berge) abgeläppt werden. Nach diesen Läppschritten haben die Oberflächen der Substrate eine Ebenheit von ≤ 5 $\mu$.

Nach einem Reinigungsschnitt wird die für die NiP-Beschichtung notwendige Oberflächenrauhigkeit mittels eines zweistufigen Drehvorganges erzeugt. Zu diesem Zweck werden die geläppten Substrate auf einem Vakuum-Spannfutter fixiert. Mit einem spitzwinkligen Diamanten wird die Seite A der Substrate vorgedreht. Nach dem Wenden der Substrate wird die Seite B mit dem spitzwinkligen Diamanten ebenfalls vorgedreht. Im Anschluß daran wird die Seite B mit einem Radiusdiamanten (r = 20 mm) fertiggedreht. Danach werden die Substrate erneut gewendet und die Seite A fertiggedreht. Durch diesen Drehvorgang wird eine Rauhigkeit der Substratoberflächen von 50 bis 100 Å erzielt. Die Ebenheit der Substrate ist immer noch < 8 $\mu$.

## Ansprüche

1. Verfahren zur Behandlung der Oberfläche eines Substrates aus einer Aluminium-Magnesium-Legierung zur Erzielung einer möglichst ebenen Oberfläche, dadurch gekennzeichnet , daß das Substrat zunächst einem Läppvorgang und danach einem Drehvorgang unterworfen wird.

2. Verfahren nach Anspruch 1, dadurch gekennzeichnet , daß der Läppvorgang in einer Zweischeibenläppmaschine durchgeführt wird.

3. Verfahren nach Anspruch 1 oder 2, dadurch gekennzeichnet , daß das eingesetzte Läppmittel aus einem Läppöl mit losem Korn besteht, dessen Körnung < 20 $\mu$ ist.

4. Verfahren nach Anspruch 1, 2 oder 3, dadurch gekennzeichnet , daß der Läppvorgang in zwei Stufen durchgeführt wird, wobei die Substrate in der ersten Läppstufe bei geringer Anpreßkraft angeläppt und in der zweiten Läppstufe (Hauptläppstufe) unter erhöhter Anpreßkraft abgeläppt werden.

5. Verfahren nach Anspruch 4, dadurch gekennzeichnet , daß sich an die Hauptläppstufe eine Nachläppstufe anschließt, in der die Substrate bei reduziertem Anpreßdruck abgeläppt werden.

6. Verfahren nach einem der vorhergehenden Ansprüche, dadurch gekennzeichnet , daß das geläppte Substrat einem Diamantdrehvorgang unterworfen wird.

7. Verfahren nach einem der vorhergehenden Ansprüche, dadurch gekennzeichnet , daß das geläppte Substrat während des Drehvorganges auf einem Vakuumspannfutter fixiert wird.

8. Verfahren nach Anspruch 6, dadurch gekennzeichnet , daß der Diamantdrehvorgang in zwei Stufen erfolgt, wobei die Oberflächen des Substrates zunächst mit einem spitzwinkligen Diamant und danach mit einem Radius-Diamanten fertiggedreht werden.

9. Verfahren nach Anspruch 8, dadurch gekennzeichnet , daß die folgenden Schritte nacheinander vorgenommen werden:
- die Seite A des Substrates wird vorgedreht,
- das Substrat wird gewendet
- die Seite B des Substrates wird vorgedreht
- die Seite B des Substrates wird fertiggedreht
- das Substrat wird gewendet
- die Seite A des Substrates wird fertiggedreht.

Europäisches
Patentamt

**EUROPÄISCHER RECHERCHENBERICHT**

Nummer der Anmeldung

EP 89 11 2566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN, Band 10, Nr. 97 (P-446)[2154], 15. April 1986; & JP-A-60 229 224 (SUMITOMO TOKUSHIYU KINZOKU K.K.) * Zusammenfassung * --- | 1-5 | G 11 B 5/84 |
| A | PATENT ABSTRACTS OF JAPAN, Band 10, Nr. 202 (P-477)[2258], 15. Juli 1986; & JP-A-61 42 730 (KYOCERA CORP.) * Zusammenfassung * --- | 1-5 | |
| A | US-A-4 762 534 (Y. ITO) * Anspruch 1 * --- | 1-5 | |
| A | EP-A-0 083 753 (INTERNATIONAL BUSINESS MACHINES CORP.) * Anspruch 1 * --- | 1,6-9 | |
| A | DE-A-3 720 974 (BASF AG) * Anspruch 1 * ----- | 1-5 | |

RECHERCHIERTE SACHGEBIETE (Int. Cl.5)

G 11 B

Der vorliegende Recherchenbericht wurde für alle Patentansprüche erstellt

| Recherchenort | Abschlußdatum der Recherche | Prüfer |
|---|---|---|
| DEN HAAG | 26-02-1990 | VITZTHUM N.A. |